# EUROPÄISCHE PATENTSCHRIFT

(11) **EP 0 936 174 B1**
(45) Veröffentlichungstag und Bekanntmachung des Hinweises auf die Patenterteilung: **17.09.2003**
(21) Anmeldenummer: 99102127.0
(22) Anmeldetag: 03.02.1999
(51) Int. Cl.: B66B 5/18, F16D 59/02

(54) **Bremse für eine Aufzugseinrichtung**
Elevator brake
Frein pour ascenseur

(30) Priorität: 12.02.1998 US 22749
(43) Veröffentlichungstag der Anmeldung: 18.08.1999
(73) Patentinhaber: INVENTIO AG, 6052 Hergiswil NW (CH)
(72) Erfinder: Christen, Jules J., 6030 Ebikon (CH)

(56) Entgegenhaltungen:
- EP-A- 0 648 703
- DE-A- 3 204 695
- US-A- 3 791 492
- US-A- 3 982 728
- US-A- 4 036 111

## Beschreibung

Die Erfindung betrifft eine Bremse für eine Aufzugseinrichtung bestehend aus einer Bremseinheit mit mindestens einem Bremszylinder und einem im Bremszylinder verschiebbaren Kolben zur Abbremsung und Festsetzung der Aufzugseinrichtung, wobei der Kolben im Bremsfall mittels einer eine Federkraft erzeugenden Feder betätigbar ist und die Feder bei gelüfteter Bremse gegen ein Druckmittel wirkt.

Aus der Patentschrift CH 440 614 ist eine Sicherheitsbremse für Fördermaschinen mit Seilantrieb bekannt geworden, bei der die Bremskraft unabhängig von Antriebsmitteln wie beispielsweise Strom, Druckluft, Drucköl erzeugt wird. Die Bremskraft wird von Federn ausgeübt, die entgegen der Kraft eines Bremslüftzylinders arbeitet. Im gelüfteten Zustand der Bremse ist der Bremslüftzylinder ständig von einem Antriebsmittel beaufschlagt. Bei Ausfall der Druckerzeugungsanlage ist die Federkraft allein wirksam und so die Sicherheitsbremsung gewährleistet.

Aus der Schrift EP 0 648 703 ist ein an einem Tragrahmen einer Aufzugskabine angeordnetes Befestigungsgehäuse mit Ausnehmungen bekannt geworden, in die Führungen einer Bremseinrichtung eingreifen, wodurch die Bremseinrichtung verschiebbar im Befestigungsgehäuse gelagert wird. Das Befestigungsgehäuse ist derart am Tragrahmen angeordnet, dass die Bremseinrichtung einen freien Schenkel mit Laufflächen einer Führungsschiene umschliesst. Die Bremseinrichtung weist je Lauffläche eine von einem Bremsplattenhalter getragene Bremsplatte mit einem Bremssensor auf. Der in die Bremsplatte eingebettete Bremssensor dient der Überwachung der Bremsplatte.

Mindestens eine Bremsplatte wird im Bremsfall von einem an der Bremseinrichtung angeordneten Bremszylinder betätigt, der mittels einer Druckmittelleitung in Verbindung mit einer Druckmitteleinrichtung steht.

Aus der Schrift US 3 791 492 ist eine Bremseinrichtung bekannt geworden, bei der ein federbeaufschlagter Bremskolben einen auf eine Bremsscheibe einwirkender Bremsbelag betätigt. Zur Lüftung der Bremse wird Druckmittel in den Bremszylinder geleitet. Alternativ kann die Bremse auch mechanisch gelüftet werden.

Ein Nachteil der bekannten Einrichtungen liegt darin, dass der von den Federn erzeugten Sicherheitsbremskraft im Bremslüftzylinder eine mindestens gleich grosse vom Antriebsmittel erzeugte Kraft ständig entgegengesetzt werden muss, damit die Bremse im Normalfall gelüftet bleibt.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Bremse zu schaffen, bei der keine Beaufschlagung des Bremslüftzylinders notwendig ist.

Die durch die Erfindung erreichten Vorteile sind im wesentlichen darin zu sehen, dass die beispielsweise als Notbremse eingesetzte Bremse sehr leicht und ohne grossen Aufwand nachträglich in bestehende Aufzugsanlagen eingebaut werden kann, weil sie einfach aufgebaut ist und ohne Druckerzeugungsanlage auskommt. Der Einbau oder der nachträgliche Einbau kann aufgrund bestehender oder neu eingeführter Sicherheitsvorschriften notwendig sein. Weiter vorteilhaft ist, dass die Bremse nach einer Notbremsung beispielsweise bei Übergeschwindigkeit oder bei unerlaubten Auf- oder Abbewegungen der Aufzugskabine bei offener Tür ohne weiteres rücksetzbar ist. Weiter vorteilhaft ist, dass die Bremskraft nicht schlagartig einsetzt, wodurch ein Seilrutsch auf der Treibscheibe vermeidbar ist und die Aufzugspassagiere nicht unangenehmen und Unfälle verursachenden Schwerkräften ausgesetzt werden.

Im folgenden wird die Erfindung anhand von lediglich einen Ausführungsweg darstellenden Zeichnungen näher erläutert.

Es zeigen:
- Fig. 1: eine Bremse in schematischer Darstellung,
- Fig. 2: eine Bremse mit mehreren Bremseinheiten,
- Fig. 3a: Einzelheiten der Bremseinheit bei gelüfteter Bremse und
- Fig. 3b: Einzelheiten der Bremseinheit im Bremsfall.

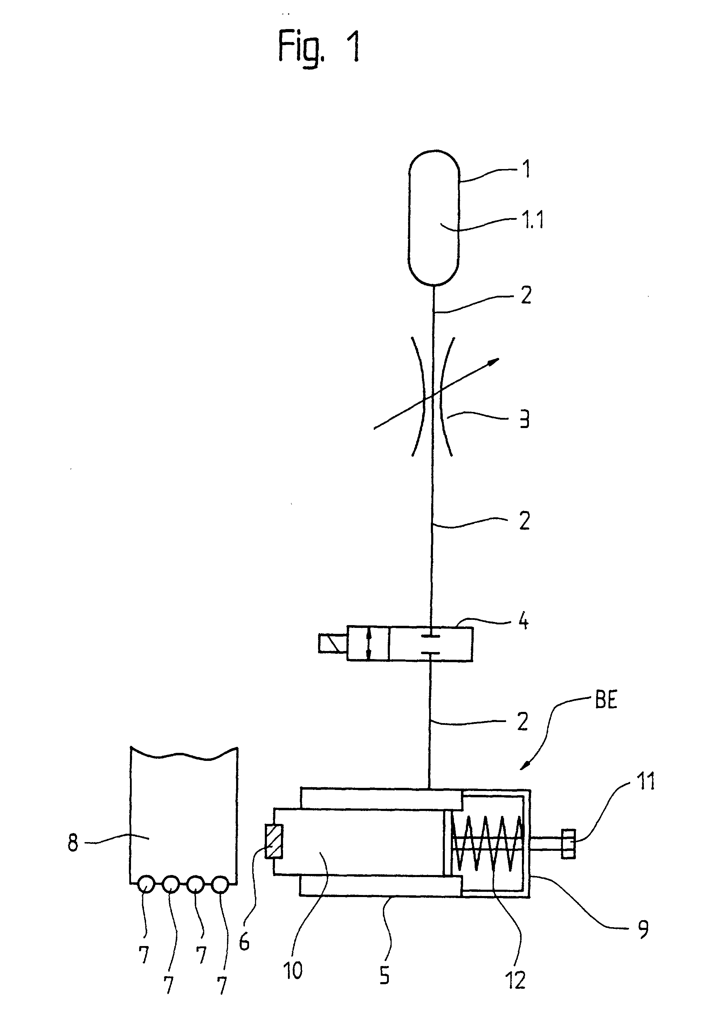

In den Fig. 1 bis 3b ist mit 1 ein beispielsweise auf dem Prinzip eines Expansionsgefässes beruhender Speicher mit einem unter schwachem Druck stehenden Druckmittel 1.1 bezeichnet. Das Druckmittel wird mittels einer Leitung 2 auf ein Drosselventil 3 geleitet und von diesem auf ein Ventil 4 mit zwei Anschlüssen und zwei Durchflussrichtungen. In Fig. 1 ist das beispielsweise elektromagnetisch betätigbare Ventil 4 im ausgeschalteten Zustand gezeigt, der Fluss des Druckmittels ist unterbrochen. Das Ventil 4 ist andererseits mittels der Leitung 2 mit einer Bremseinheit BE verbunden. Die Bremseinheit BE besteht aus einem Bremszylinder 5, der beispielsweise im Notfall mittels eines Bremsbelages 6 eine Seile 7 führende Treibscheibe 8 abbremst und festsetzt. An den Seilen 7 sind einerseits eine nicht dargestellte Aufzugskabine und andererseits ein nicht dargestelltes Gegengewicht festgemacht. Der Bremsbelag 6 kann beispielsweise auch auf eine separate Bremsscheibe oder auf die Seile 7 einwirken. Am Bremszylinder 5 ist ein Joch 9 angeordnet, das einen an einem Kolben 10 angeordneten Kolbenbolzen 11 führt. Der Bremsbelag 6 ist dem Kolbenbolzen 11 gegenüberliegend am Kolben 10 angeordnet. Eine Druckfeder 12 erzeugt die notwendige Kraft zum Abbremsen und Festsetzen der Treibscheibe 8 oder der Bremsscheibe. Lüftung und Auslösung der Bremse sind weiter unten näher erläutert.

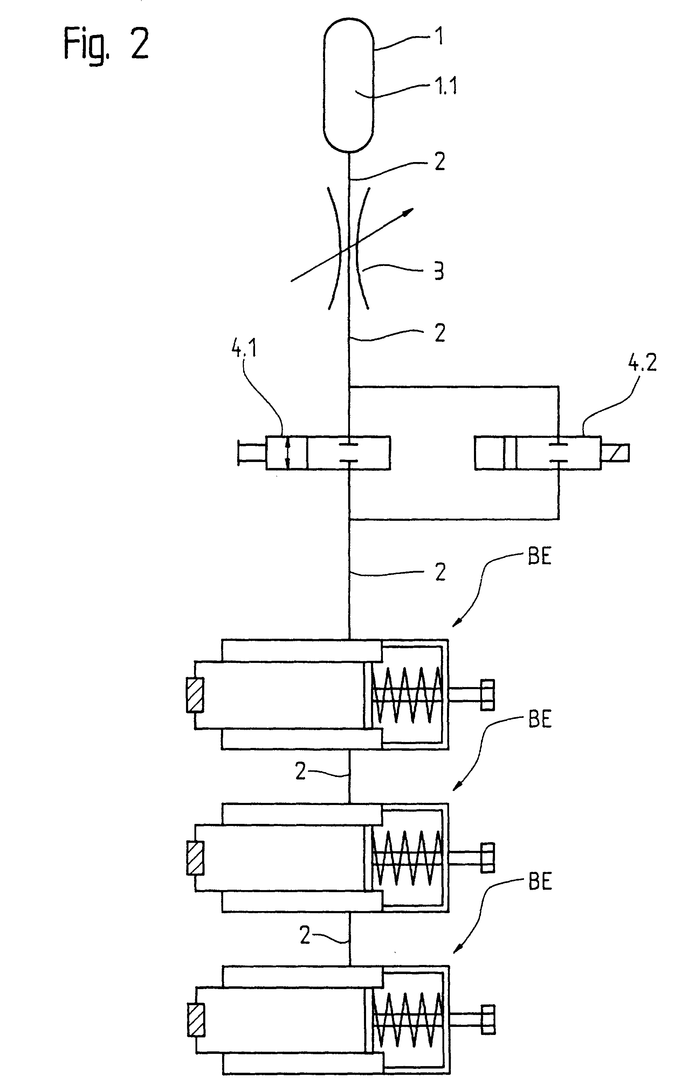

Anstelle des Ventils 4 mit zwei Durchflussrichtungen kann, wie in Fig. 2 gezeigt, ein beispielsweise handbetätigbares Ventil 4.1 mit einer ersten Durchflussrichtung und ein einstellbares beispielsweise elektromagnetisch betätigbares Freigabeventil 4.2 mit einer zweiten Durchflussrichtung vorgesehen sein. Mittels des Freigabeventils 4.2 kann der Bremskraftverlauf eingestellt werden, sodass die Bremskraft nicht schlagartig einsetzt und für die Aufzugsbenutzer eine erträgliche Verzögerung entsteht.

Je nach notwendiger Bremskraft kann, wie in Fig. 2 gezeigt, die Bremse mehrere Bremseinheiten BE aufweisen, die betreffend Druckmittelversorgung seriell zusammengeschaltet sind. Die Bremseinheiten BE können betreffend Druckmittelversorgung auch parallel zusammengeschaltet sein. Anstelle des Ventils 4 mit zwei Durchflussrichtungen ist ein beispielsweise handbetätigbares Ventil 4.1 mit einer ersten Durchflussrichtung und ein einstellbares beispielsweise elektromagnetisch betätigbares Freigabeventil 4.2 mit einer zweiten Durchflussrichtung vorgesehen. Lüftung und Auslösung der Bremse sind weiter unten näher erläutert.

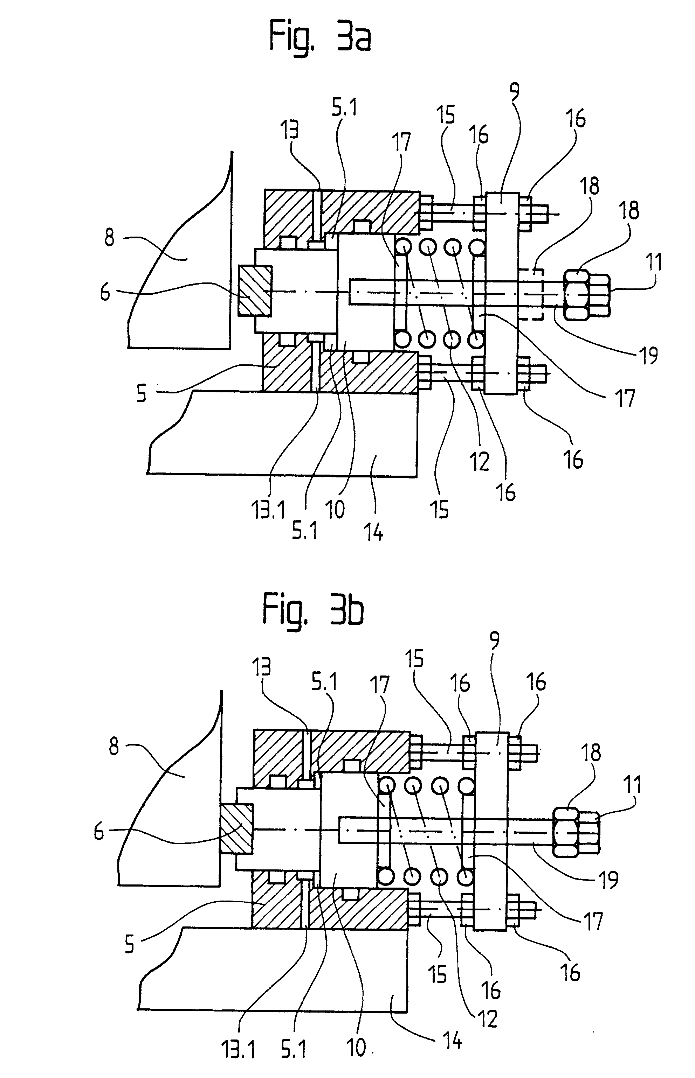

Fig. 3a und 3b zeigen Einzelheiten der Bremseinheit BE bei gelüfteter Bremse bzw. im Bremsfall. Die Leitung 2 führt zu einem Leitungsanschluss 13 des Bremszylinders 5, der an einem festen Rahmen 14 der Antriebsmaschine angeordnet ist. Im Falle mehrerer Bremseinheiten BE kann eine weitere Bremseinheit BE an einem weiteren Leitungsanschluss 13.1 angeschlossen werden. Das mittels der Leitung 2 zugeführte Druckmittel 1.1 füllt eine Zylinderkammer 5.1. Das Joch 9 wird von am Bremszylinder 5 angeordneten Jochbolzen 15 getragen und ist mittels Muttern 16 gesichert. Zur Zentrierung der Druckfeder 12 ist je ein Teller 17 am Kolben 10 und am Joch 9 befestigt. Mit 18 ist eine auf einem Gewinde 19 des Kolbenbolzens 11 verdrehbare Rücksetzmutter bezeichnet. Zur Rücksetzung der Bremseinheit BE wird die Rücksetzmutter 18 in die mit unterbrochener Linie gezeigte Stellung gebracht.

Anstelle des Kolbenbolzens 11 und der Rücksetzmutter 18 kann beispielsweise ein Spannhebel verwendet werden, mittels dem der Kolben 10 entgegen der Federkraft der Druckfeder 12 rücksetzbar ist und der beispielsweise nach der Rücksetzung abnehmbar ist und der für die Rücksetzung weiterer Bremseinheiten verwendet werden kann. Der Spannhebel kann manuell oder mittels einer Energiequelle angetrieben werden.

Nach einem Bremsfall ist die Bremseinheit BE in dem in Fig. 3b gezeigten Zustand. Der Bremsbelag 6 liegt an der Treibscheibe 8 an, wobei die volle Federkraft der Druckfeder 12 in Abhängigkeit des Reibungskoeffizienten zwischen Bremsbelag 6 und Treibscheibe 8 eine maximale Bremskraft erzeugt. Durch das Vorschieben des Kolbens 10 hat die Zylinderkammer 5.1 ein minimales Volumen angenommen.

Die Rücksetzung der Bremse wird folgendermassen durchgeführt:

Das Ventil 4 bzw. das Ventil 4.1 sind auf Durchfluss geschaltet und ein nicht dargestelltes je Bremszylinder 5 angeordnetes Lüftungsventil geöffnet. Mittels der am Joch 9 anstehenden Rücksetzmutter 18 und dem Gewinde 19 wird der Kolbenbolzen 11 und der Kolben 10 entgegen der Federkraft der Druckfeder 12 nach aussen bewegt. Dabei vergrössert sich die Zylinderkammer 5.1 zunehmend und füllt sich mit dem Druckmittel 1.1. Nachdem der Kolben 10 in die Endlage gebracht worden ist, wird das Ventil 4 bzw. das Ventil 4.1 auf Absperrung der Leitung 2 geschaltet und das Lüftungsventil geschlossen. Die Rücksetzmutter 18 wird in die Ausgangslage zurückgedreht. Die Federkraft der Druckfeder 12 wirkt nun auf das die Zylinderkammer 5.1 füllende Druckmittel 1.1 ein, das den Kolben 10 und somit den Bremsbelag 6 in der in Fig. 3a gezeigten Ausgangslage hält.

Im Bremsfall beispielsweise bei Übergeschwindigkeit oder bei unerlaubten Auf- oder Abbewegungen der Aufzugskabine bei offener Tür wird das Ventil 4 bzw. das Freigabeventil 4.2 auf Durchfluss geschaltet. Das Druckmittel 1.1 kann nun via Ventil 4, 4.2 und Leitung 2 in den Speicher 1 zurückfliessen. Der Kolben 10 mit dem Bremsbelag 6 bewegt sich unter Einwirkung der Federkraft der Druckfeder 12 in die in Fig. 3b gezeigte Lage, in der die Treibscheibe 8 abgebremst und festgehalten wird.

## Patentansprüche

1. Verfahren zum Betreiben einer Bremse für eine Aufzugseinrichtung bestehend aus einer Bremseinheit (BE) mit mindestens einem Bremszylinder (5) und einem im Bremszylinder (5) verschiebbaren Kolben (10) zur Abbremsung und Festsetzung der Aufzugseinrichtung, wobei der Kolben (10) im Bremsfall mittels einer eine Federkraft erzeugenden Feder (12) betätigbar ist und die Feder (12) bei gelüfteter Bremse gegen ein Druckmittel (1.1) wirkt,
**dadurch gekennzeichnet,**
**dass** vor dem Lüften der Bremse eine Absperreinrichtung (4, 4.1, 4.2) den Zufluss von Druckmittel (1.1) zum Bremszylinder (5) ermöglicht, wobei der Kolben (10) mittels des unter schwachem Druck stehenden Druckmittels (1.1) nicht betätigt wird,
**dass** die Bremse mittels einer mechanischen Rücksetzeinrichtung (9, 11, 18) der Bremseinrichtung (BE) gelüftet wird, wobei sich der Bremszylinder (5) mit Druckmittel (1.1) füllt und
**dass** nach dem Lüften der Bremse die Absperreinrichtung (4, 4.1, 4.2) den Abfluss des Druckmittels (1.1) vom Bremszylinder (5) verhindert und im Bremsfall den Abfluss des Druckmittels (1.1) vom Bremszylinder (5) ermöglicht.

2. Verfahren nach Anspruch 1,
**dadurch gekennzeichnet,**
**dass** zum Auslösen der Bremse die Absperreinrichtung (4, 4.1, 4.2) den Abfluss des Druckmittels (1.1) vom Bremszylinder (5) ermöglicht.

3. Bremse für eine Aufzugseinrichtung bestehend aus einer Bremseinheit (BE) mit mindestens einem Bremszylinder (5) und einem im Bremszylinder (5) verschiebbaren Kolben (10) zur Abbremsung und Festsetzung der Aufzugseinrichtung, wobei der Kolben (10) im Bremsfall mittels einer eine Federkraft erzeugenden Feder (12) betätigbar ist und die Feder (12) bei gelüfteter Bremse gegen ein Druckmittel (1.1) wirkt,
**dadurch gekennzeichnet,**
**dass** der Bremszylinder (5) an ein Expansionsgefäss (1) mit unter schwachem Druck stehendem Druckmittel (1.1) angeschlossen ist,
**dass** die Bremseinheit (BE) eine mechanische Rücksetzeinrichtung (9, 11, 18) zur Lüftung der Bremse aufweist,
**dass** eine Absperreinrichtung (4, 4.1, 4.2) für den Zufluss des Druckmittels (1.1) vom Expansionsgefäss (1) zum Bremszylinder (5) bzw. für den Abfluss des Druckmittels (1.1) vom Bremszylinder (5) zum Expansionsgefäss (1) vorgesehen ist und
**dass** die Absperreinrichtung (4, 4.1, 4.2) zum Halten des Druckmittels (1.1) im Bremszylinder bei gelüfteter Bremse vorgesehen ist, wobei die Federkraft der Feder (12) gegen das Druckmittel (1.1) wirkt.

4. Bremse nach Anspruch 3,
**dadurch gekennzeichnet,**
**dass** die Rücksetzeinrichtung einen mit dem Kolben (10) in Verbindung stehender Kolbenbolzen (11) aufweist, der mittels einer an einem Joch (9) anstehenden Rücksetzmutter (18) verschiebbar ist.

5. Bremse nach Anspruch 3,
**dadurch gekennzeichnet,**
**dass** die Rücksetzeinrichtung einen Spannhebel aufweist, mittels dem der Kolben (10) entgegen der Federkraft der Druckfeder 12 rücksetzbar ist.

6. Bremse nach Anspruch 3,
**dadurch gekennzeichnet,**
**dass** die Absperreinrichtung (4, 4.1, 4.2) für den Bremsfall ein Freigabeventil (4.2) aufweist, mittels dem der Bremskraftverlauf einstellbar ist.

## Claims

1. Method of operating a brake for lift equipment, consisting of a brake unit (BE) with at least one brake cylinder (5) and a piston (10), which is displaceable in the brake cylinder (5), for braking and arresting the lift equipment, wherein the piston (10) is actuable in the braking case by means of a spring (12) producing a spring force and the spring (12) acts against a pressure medium (1.1) when the brake is released, **characterised in that** before release of the brake a blocking device (4, 4.2, 4.2) enables inflow of pressure medium (1.1) to the brake cylinder (5), wherein the piston (10) is not actuated by means of the pressure medium (1.1) disposed under weak pressure, that the brake is released by means of a mechanical resetting device (9, 11, 18) of the brake device (BE), wherein the brake cylinder (5) fills with pressure medium (1.1), and that after release of the brake the blocking device (4, 4.1, 4.2) prevents outflow of the pressure medium (1.1) from the brake cylinder and in the case of braking enables outflow of the pressure medium (1.1) from the brake cylinder (5).

2. Method according to claim 1, **characterised in that** for tripping the brake the blocking device (4, 4.1, 4.2) enables outflow of the pressure medium (1.1) from the brake cylinder (5).

3. Brake for lift equipment, consisting of a brake unit (BE) with at least one brake cylinder (5) and a piston (10), which is displaceable in the brake cylinder (5), for braking and arresting the lift equipment, wherein the piston (10) is actuable in the braking case by means of a spring (12) producing a spring force and the spring (12) acts against a pressure medium (1.1) when the brake is released, **characterised in that** the brake cylinder (5) is connected with an expansion vessel (1) with pressure medium (1.1 ) disposed under weak pressure, that the brake unit (BE) comprises a mechanical resetting device (9, 11, 18) for release of the brake, that a blocking device (4, 4.1, 4.2) for inflow of the pressure medium (1.1) from the expansion vessel (1) to the brake cylinder (5) or for the outflow of the pressure medium (1.1) from the brake cylinder (5) to the expansion vessel (1) is provided and that the blocking device (4, 4.1, 4.2) for keeping the pressure medium (1.1) in the brake cylinder when the brake is released is provided, wherein the spring force of the spring (12) acts against the pressure medium (1.1).

4. Brake according to claim 3, **characterised in that** the resetting device comprises a piston pin (11) which is disposed in connection with the piston (10) and which is displaceable by means of a resetting nut (18) next to a yoke (9).

5. Brake according to claim 3, **characterised in that** the resetting device comprises a tensioning lever by means of which the piston is resettable against the spring force of the compression spring (12).

6. Brake according to claim 3, **characterised in that** the blocking device (4, 4.1, 4.2) comprises, for the braking case, a release valve (4.2) by means of which the course of the braking force is settable.

## Revendications

1. Procédure pour l'exploitation d'un frein pour une installation d'ascenseur se composant d'une unité de freinage (BE) avec au moins un cylindre de frein (5) et un piston (10) amovible dans le cylindre de frein (5) pour le freinage et la fixation de l'installation d'ascenseur, auquel cas le piston (10), en cas de freinage, est actionnable au moyen d'un ressort (12) produisant une tension du ressort et le ressort (12) agit, lors d'un frein desserré, contre un moyen de pression (1.1), **caractérisé par le fait qu'**avant le desserrement du frein un dispositif d'arrêt (4, 4.1, 4.2) rend possible l'alimentation d'un moyen de pression (1.1) au cylindre de frein (5), auquel cas le piston (10), par le moyen de pression (1.1) étant sous faible pression, n'est pas actionné, que le frein est desserré au moyen d'une installation de reculement mécanique (9, 11, 18) du système de freinage (BE), auquel cas le cylindre de frein (5) se remplit avec le moyen de pression (1.1) et qu'après le desserrement du frein, le dispositif d'arrêt (4, 4.1, 4.2) évite l'écoulement du moyen de pression (1.1) du cylindre de frein (5) et en cas de freinage il permet l'écoulement du moyen de pression (1.1) du cylindre de frein (5).

2. Procédure selon la revendication 1, **caractérisé par le fait que** pour le déclenchement du frein, le dispositif d'arrêt (4, 4.1, 4.2) permet l'écoulement du moyen de pression (1.1) du cylindre de frein (5).

3. Frein pour une installation d'ascenseur se composant d'une unité de freinage (BE) avec au moins un cylindre de frein (5) et un piston (10) amovible dans le cylindre de frein (5) pour le freinage et la fixation de l'installation d'ascenseur, auquel cas le piston (10), en cas de freinage, est actionnable au moyen d'un ressort (12) produisant une tension du ressort et le ressort (12) agit, lors du frein desserré, contre un moyen de pression (1.1), **caractérisé par le fait que** le cylindre de frein (5) est joint à un vase d'expansion (1) avec un moyen de pression (1.1) étant sous faible pression, que l'unité de freinage (BE) présente une installation de reculement mécanique (9, 11, 18) pour desserrer le frein, qu'un dispositif d'arrêt (4, 4.1, 4.2) est prévu pour l'approvisionnement de moyen de pression (1.1) du vase d'expansion (1) au cylindre de frein (5) ou respectivement pour l'écoulement du moyen de pression (1.1) du cylindre de frein (5) au vase d'expansion (1) et que le dispositif d'arrêt (4, 4.1, 4.2) est prévu pour le maintien du moyen de pression (1.1) dans le cylindre de frein lors de frein desserré, auquel cas la tension du ressort du ressort (12) agit contre le moyen de pression (1.1).

4. Frein selon la revendication 3, **caractérisé par le fait que** l'installation de reculement présente un axe de piston (11) étant en relation avec le piston (10) et cet axe de piston (11) est déplaçable au moyen d'un écrou de retour (18) affleurant l'arche de pont (9).

5. Frein selon la revendication 3, **caractérisé par le fait que** l'installation de reculement présente un levier de serrage, au moyen duquel le piston (10) peut être reculé contre la tension du ressort du ressort de pression (12).

6. Frein selon la revendication 3, **caractérisé par le fait que** le dispositif d'arrêt (4, 4.1, 4.2) présente pour le cas de freinage une valve de libération (4.2), au moyen de laquelle l'écoulement de la force de freinage est réglable.
